# FASCICULE DE BREVET EUROPEEN

(11) **EP 0 596 790 B1**
(45) Date de publication et mention de la délivrance du brevet: **18.09.1996**
(21) Numéro de dépôt: 93402685.7
(22) Date de dépôt: 02.11.1993
(51) Int. Cl.: B61C 3/00

(54) **Ensemble d'équipements haute tension pour engin ferroviaire à traction électrique**
Hochspannungs-Ausstattungseinheit für elektrisches Schienentreibfahrzeug
High voltage equipment for electric railway traction unit

(30) Priorité: 06.11.1992 FR 9213386
(43) Date de publication de la demande: 11.05.1994
(73) Titulaire: GEC ALSTHOM TRANSPORT SA, 75016 Paris (FR)
(72) Inventeur: Rouch, Robert, F-65310 Odos (FR); Descazeaux, Michel, F-65430 Soues (FR)
(74) Mandataire: Fournier, Michel

(56) Documents cités:
- EP-A- 0 383 302
- EP-A- 0 551 554
- FR-A- 2 129 031
- E&I ELEKTROTECHNIK UND INFORMATIONSTECHNIK vol. 109, no. 2 , 27 Février 1992 , WIEN pages 101 - 106 XP292373 J. WANTKE 'Die Entwicklung der Bo'Bo'-Lokomotiven bei den österrechischen Bundesbahnen'
- ZEITSCHRIFT FüR EISENBAHNWESEN UND VERKEHRSTECHNIK - DIE EISENBAHNTECHNIK - GLASERS ANNALEN vol. 116, no. 3 , Mars 1992 , BERLIN pages 64 - 69 XP264455 ECKARD MARTIN 'Die Baureihe 112 - erste gemeinsam von der Deutschen Bundesbahn und der Deutschen Reichsbahn beschaffte elektrische Lokomotive'
- ZEITSCHRIFT FüR EISENBAHNWESEN UND VERKEHRSTECHNIK - DIE EISENBAHNTECHNIK - GLASERS ANNALEN vol. 114, no. 6 , Juin 1990 , BERLIN pages 174 - 184 XP200054 GERHARD DEPPISCH 'Die elektrische Ausrüstung der ersten Zweisystem-Lokomotiven der Baureihe 14E nut Drehstrom-Antriebstechnik für die Südafrikanischen Eisenbahnen SATS'
- ZEITSCHRIFT FüR EISENBAHNWESEN UND VERKEHRSTECHNIK - DIE EISENBAHNTECHNIK - GLASERS ANNALEN, vol. 114, no. 6, Juin 1990, BERLIN, pages 174 - 184, XP200054, GERHARD DEPPISCH: "Die elektrische Ausrüstung der ersten Zweisystem-Lokomotiven der Baureihe 14E mit Drehstrom-Antriebstechnik für die Südafrikanischen Eisenbahnen SATS"

## Description

La présente invention concerne un ensemble d'équipements haute tension pour engin ferroviaire à traction électrique.

Un engin de traction ferroviaire, du type à traction électrique, comporte en toiture un certain nombre d'appareils électriques outre les pantographes. On peut ainsi trouver un disjoncteur monophasé 25 kV/15 kV, un sectionneur de mise à la terre, un commutateur monophasé/continu, un transformateur de palpage, un sectionneur de la ligne haute tension et des transformateurs d'intensité. La disposition en toiture de tous ces appareils entraîne un nombre important d'inconvénients. Ils provoquent une trainée lors de l'avancement du train d'autant plus gênante pour les trains à grande vitesse que l'on cherche à atteindre des vitesses de roulement de plus en plus élevées. Ils constituent une masse importante qui doit être prise en considération lors de la conception du toit de la motrice. En effet, en plus de la masse des appareils électriques, il est nécessaire d'installer des câbles de grande longueur pour assurer le connexion entre les divers appareils. Il faut aussi prévoir des isolateurs d'appareil et des isolateurs pour les connexions, ces isolateurs devant résister aux intempéries. Il faut assurer une maintenance et un nettoyage réguliers de ces appareils logés à un endroit difficilement accessible. Les isolateurs comportent une partie en céramique qui se casse facilement sous l'impact d'une pierre et ils sont donc sujets au vandalisme. L'installation en toiture de ces appareils et leur connexion électrique demandent un temps de mise en oeuvre relativement important et ne peuvent se faire qu'une fois les éléments de toiture mis en place.

Afin de pallier ces inconvénients, on propose selon la présente invention de regrouper au moins une partie de ces appareils et de leurs annexes (connexions, isolateurs) en un ensemble monobloc disposé dans une enceinte étanche remplie d'un gaz diélectrique.

L'utilisation d'un gaz diélectrique tel que l'hexafluorure de soufre permet de réduire la taille de certains appareils ce qui permet d'installer l'enceinte étanche à l'intérieur de l'engin de traction.

L'invention a donc pour objet un ensemble d'équipements haute tension pour engin ferroviaire à traction électrique, ces équipements comprenant des appareils permettant d'alimenter ou de commander, à partir de la connexion à au moins un pantographe, des dispositifs électriques de l'engin de traction, caractérisé en ce qu'il forme un ensemble monobloc disposé dans une enceinte étanche remplie d'un gaz diélectique.

EP-A-0 383 382 décrit un ensemble d'équipements pour engin ferroviaire qui possède les caractéristiques de la première partie de la revendication 1. EP-A-0 551 554 (qui forme partie de l'art antérieur selon l'art 54(3)OEB) décrit l'utilisation de l'hexafluorure de soufre comme gas réfrigerant pour un transformateur dans un engin ferroviaire.

L'ensemble peut être avantageusement installé à l'intérieur de l'engin de traction. Ceci permet de soulager la toiture et de rendre son carénage plus efficace.

Les équipements peuvent comprendre au moins l'un des appareils suivants : un disjoncteur monophasé, un transformateur de palpage, un sectionneur de ligne haute tension, un transformateur d'intensité, un commutateur monophasé/continu.

Les constacts électriques de sectionneur et de disjoncteurs peuvent être placés dans des ampoules sous vide.

L'enceinte peut comporter des moyens de détection de fuites de gaz.

L'enceinte peut être pourvue d'au moins un soufflet permettant le passage d'un organe de commande pneumatique.

Elle peut servir de support à d'autres équipements disposés à l'extérieur de l'enceinte.

Le gaz diélectrique est de préférence de l'hexafluorure de soufre SF₆.

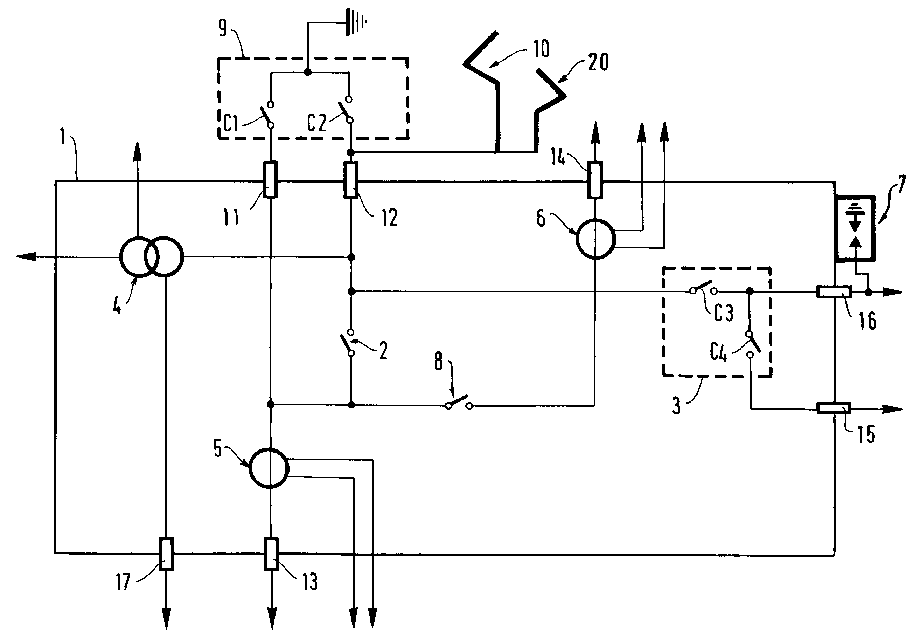

L'invention sera mieux comprise et d'autres détails et particularités apparaîtront à la lecture de la description qui va suivre, donnée à titre non limitatif, accompagnée du dessin annexé qui représente, de manière schématique, un ensemble d'équipements haute tension pour engin ferroviaire à traction électrique.

Sur la figure annexée, la référence 1 représente une enceinte étanche contenant un certain nombre d'appareillages électriques qui étaient auparavant disposés sur le toit d'un engin à traction électrique, ainsi que les connexions correspondantes. L'enceinte peut être constituée par un boîtier en aluminium fermé par un couvercle en matériau isolant.

L'enceinte 1 est étanche et renferme un gaz diélectrique, par exemple de l'hexafluorure de soufre sous une pression d'environ 2 bars.

Les équipements électriques qui sont installés à l'intérieur de l'enceinte peuvent comprendre tout ou partie des équipements habituellement disposés en toiture et qui peuvent sans problème particulier être placés dans ce type d'enceinte. La présence de gaz diélectrique à l'intérieur de l'enceinte permet de réduire la taille de certains équipements (par exemple les transformateurs), ce qui conduit à un gain de poids non négligeable. De plus, les équipements pouvant être disposés à proximité les uns des autres, les connexions entre les équipements en sont raccourcies d'autant.

A titre d'exemple, dans le cas d'un engin de traction pour train à grande vitesse, du type TGV, l'enceinte 1 peut comprendre:
- un disjoncteur monophasé 2 fonctionnant en 25 kV/15 kV (tensions alternatives monophasées de 25 kV, 50 Hz pour le France et 15 kV, 16 ²/3 Hz pour la Suisse),
- un commutateur monophasé/continu 3,
- un transformateur de palpage 4,
- un sectionneur de la ligne haute tension 8,
- deux transformateurs d'intensité 5 et 6.

Le transformateur d'intensité 5 fait partie du circuit de mesure du courant pour l'engin de traction équipé du pantographe 10 en service. Sous la référence 20, on a représenté un autre pantographe qui est utilisé pour un autre type de tension caténaire. Le transformateur d'intensité 6 fait partie du circuit de mesure du courant circulant dans la ligne de toiture vers l'engin de traction situé à l'autre extrémité de la rame.

Le transformateur de palpage 4 fait partie du circuit qui détermine le type de tension présente sur la caténaire.

Le commutateur monophasé/continu 3 a été symbolisé par deux commutateurs C3 et C4. Le commutateur monophasé/continu 3 a été disposé entièrement dans l'enceinte 1 mais la partie C4 peut très bien être placée à l'extérieur de l'enceinte.

Des bornes haute tension sont prévues sur l'enceinte 1 pour assurer les liaisons électriques entre les équipements internes à l'enceinte et les équipements externes.

Le sectionneur de mise à la terre 9, que l'on a représenté par les deux contacts C1 et C2, n'a pas été inclus dans l'enceinte étanche pour cet exemple de réalisation. Il peut être néanmoins lié mécaniquement à l'enceinte. Il doit être isolé sous 25 kV compte tenu des liaisons à effectuer entre le disjoncteur monophasé 2 et le sectionneur de mise à la terre 9. Deux bornes haute tension 11 et 12 assurent la liaison électrique au circuit 9. La borne 12 assure également la liaison avec le pantographe 10.

La borne haute tension 13 assure la liaison électrique avec le transformateur principal de l'engin de traction.

La borne haute tension 14 assure la connexion électrique avec la ligne haute tension.

La borne haute tension 15 assure la liaison électrique entre le commutateur monophasé/continu 3 et le circuit redresseur d'alimentation des auxiliaires. La borne haute tension 16 assure la liaison électrique entre ce commutateur et le disjoncteur à courant continu.

La borne haute tension 17 assure la liaison électrique entre le transformateur de palpage 4 et un diviseur potentiométrique de palpage à courant continu.

Les bornes 11, 12, 13 et 14 sont des traversées prévues pour des tensions de 25 kV. Les bornes 15, 16 et 17 sont des traversées prévues pour des tensions de 3 kV.

Un dispositif parafoudre continu 7 est fixé sur la paroi externe de l'enceinte 1.

Si l'enceinte doit comprendre des équipements à commande pneumatique, il faut prévoir des soufflets dans la paroi de l'enceinte pour le passage des organes de commande.

Les raccordements basse tension concernent les liaisons entre le transformateur de palpage 4 et les relais de palpage 25 kV, 50 Hz et 15 kV, 16 ²/3 Hz, les liaisons entre les transformateurs d'intensité 5 et 6 et les circuits de mesure correspondants, enfin les liaisons entre les circuits de commande et de contrôle des contacts auxiliaires et le disjoncteur 2, le commutateur monophasé/continu 3, le sectionneur de la ligne haute tension 8. Toutes ces liaisons peuvent être réalisées et regroupées sur un connecteur.

On peut avantageusement utiliser des ampoules sous vide pour confiner les arcs électriques survenant lors de l'utilisation des contacts C3 et C4, du sectionneur 8 et du disjoncteur monophasé 2. Ceci permet d'éviter la dégradation du gaz diélectrique contenu dans l'enceinte 1.

L'exemple d'application de l'invention qui vient d'être décrit permet un gain de poids non négligeable puisque la masse des équipements passe de 500 kg sans utiliser l'invention à environ 250 kg lorsque les équipements cités plus haut sont installés dans l'enceinte remplie d'hexafluorure de soufre.

L'enceinte peut être montée dans l'engin de traction mais à proximité du pantographe ce qui réduit la longueur des connexions électriques.

L'enceinte peut être équipée d'un détecteur de fuites,par exemple un densimètre à double seuil.

Un autre avantage de l'invention est de délivrer, pour le montage dans l'engin de traction, un ensemble complet et déjà testé. Ceci contribue à réduire la durée de construction de l'engin.

## Revendications

1. Ensemble d'équipements haute tension pour engin ferroviaire à traction électrique, ces équipements comprenant des appareils (2 à 6, 8) permettant d'alimenter ou de commander, à partir de la connexion à au moins un pantographe (10), des dispositifs électriques de l'engin de traction, caractérisé en ce qu'il forme un ensemble monobloc disposé dans une enceinte étanche remplie d'un gaz diélectrique.

2. Ensemble selon la revendication 1, caractérisé en ce qu'il est installé à l'intérieur de l'engin de traction.

3. Ensemble selon l'une des revendications 1 ou 2, caractérisé en ce que les équipements comprennent au moins l'un des appareils suivants: un disjoncteur monophasé (2), un transformateur de palpage (4), un sectionneur de ligne haute tension (8), un transformateur d'intensité (5, 6), un commutateur monophasé/continu (3).

4. Ensemble selon l'une quelconque des revendications 1 à 3, caractérisé en ce que les contacts électriques de sectionneur et de disjoncteur sont placés dans des ampoules sous vide.

5. Ensemble selon l'une quelconque des revendications 1 à 4, caractérisé en ce que l'enceinte (1) comporte des moyens de détection de fuites de gaz.

6. Ensemble selon l'une quelconque des revendications 1 à 5, caractérisé en ce que l'enceinte est pourvue d'au moins un soufflet permettant le passage d'un organe de commande pneumatique.

7. Ensemble selon l'une quelconque des revendications 1 à 6, caractérisé en ce que l'enceinte sert de support à d'autres équipements (7) disposés à l'extérieur del'enceinte.

8. Ensemble selon l'une quelconque des revendications précédentes, caractérisé en ce que le gaz diélectrique est de l'hexafluorure de soufre.

## Claims

1. An assembly of high voltage equipment for an electric traction vehicle, this equipment comprising devices (2 to 6, 8) allowing electrical apparatus of the traction vehicle to be powered or controlled, via connection to at least one pantograph (10), the assembly being characterized in that it forms an integral assembly arranged in a sealed enclosure filled with a dielectric gas.

2. An assembly according to claim 1, characterized in that the assembly is installed inside the traction vehicle.

3. An assembly according to either of claims 1 or 2, characterized in that the equipment comprises at least one of the following devices: a monophase circuit-breaker (2), a voltage sensing transformer (4), a high voltage line isolating switch (8), a current transformer (5, 6), a monophase/d.c. change over switch (3).

4. An assembly according to any one of claims 1 to 3, characterized in that the electrical contacts of the isolating switch and of the circuit-breaker are placed in evacuated capsules.

5. An assembly according to any one of claims 1 to 4, characterized in that the enclosure (1) includes means for detecting gas leaks.

6. An assembly according to any one of claims 1 to 5, characterized in that the enclosure is provided with at least one bellows for the passage of a pneumatic control element.

7. An assembly according to any one of claims 1 to 6, characterized in that the enclosure serves as a support for other equipment (7) mounted outside the enclosure.

8. An assembly according to any one of the preceding claims, characterized in that the dielectric gas is sulfur hexafluoride.

## Patentansprüche

1. Einheit von Hochspannungsanlagen für einen elektrischen Eisenbahntriebwagen, wobei diese Anlagen Geräte (2 bis 6, 8) enthalten, mit denen durch Verbindung mit mindestens einem Stromabnehmer (10) elektrische Vorrichtungen des Triebwagens gespeist oder gesteuert werden können, dadurch gekennzeichnet, daß die Einheit eine Baueinheit bildet, die in einem dichten, mit einem dielektrischen Gas gefüllten Gehäuse untergebracht ist.

2. Einheit nach Anspruch 1, dadurch gekennzeichnet, daß sie in dem Triebwagen installiert ist.

3. Einheit nach einem der Ansprüche 1 oder 2, dadurch gekennzeichnet, daß die Anlagen mindestens eines der folgenden Geräte enthalten: einen einphasigen Leistungsschalter (2), einen Tasttransformator (4), einen Hochspannungs-Trennschalter (8), einen Stromtransformator (5, 6) und einen Wandler (3) von einphasigem Wechselstrom in Gleichstrom.

4. Einheit nach einem beliebigen der Ansprüche 1 bis 3, dadurch gekennzeichnet, daß die elektrischen Kontakte von Trenn- und Leistungsschalter in Vakuumgefäßen untergebracht sind.

5. Einheit nach einem beliebigen der Ansprüche 1 bis 4, dadurch gekennzeichnet, daß das Gehäuse (1) Mittel zur Erfassung von Gaslecks aufweist.

6. Einheit nach einem beliebigen der Ansprüche 1 bis 5, dadurch gekennzeichnet, daß das Gehäuse mindestens einen Balg besitzt, durch den ein pneumatisches Steuerorgan verlaufen kann.

7. Einheit nach einem beliebigen der Ansprüche 1 bis 6, dadurch gekennzeichnet, daß das Gehäuse als Träger für andere, außerhalb des Gehäuses angeordnete Anlagen (7) dient.

8. Einheit nach einem beliebigen der vorhergehenden Ansprüche, dadurch gekennzeichnet, daß das dielektrische Gas Schwefelhexafluorid ist.
